# EUROPÄISCHE PATENTSCHRIFT

(11) **EP 3 234 412 B1**
(45) Veröffentlichungstag und Bekanntmachung des Hinweises auf die Patenterteilung: **02.09.2020**
(21) Anmeldenummer: 15817232.0
(22) Anmeldetag: 17.12.2015
(51) Int. Cl.: F16H 61/02

(54) **VERFAHREN ZUM BETREIBEN EINER GETRIEBEEINRICHTUNG FÜR EIN KRAFTFAHRZEUG SOWIE ENTSPRECHENDE GETRIEBEEINRICHTUNG**
METHOD FOR OPERATING A TRANSMISSION DEVICE FOR A MOTOR VEHICLE, AND CORRESPONDING TRANSMISSION DEVICE
PROCÉDÉ POUR FAIRE FONCTIONNER UN DISPOSITIF DE TRANSMISSION POUR UN VÉHICULE AUTOMOBILE ET DISPOSITIF DE TRANSMISSION CORRESPONDANT

(30) Priorität: 19.12.2014 DE 102014019127
(43) Veröffentlichungstag der Anmeldung: 25.10.2017
(73) Patentinhaber: Audi AG, 85045 Ingolstadt (DE)
(72) Erfinder: MORGEN, Christian, 80804 München (DE)
(74) Vertreter: Lehle, Josef
(86) Internationale Anmeldenummer: PCT/EP2015/080280
(87) Internationale Veröffentlichungsnummer: WO 2016/097179

(56) Entgegenhaltungen:
- EP-A2- 1 134 458
- WO-A1-02/087917
- WO-A1-2007/030057
- US-A- 4 658 676
- US-A- 4 941 096

## Beschreibung

Die Erfindung betrifft ein Verfahren zum Betreiben einer Getriebeeinrichtung für ein Kraftfahrzeug, wobei eine Fahrganggesamtmenge alle Fahrgänge des Getriebes enthält. Die Erfindung betrifft weiterhin eine Getriebeeinrichtung für ein Kraftfahrzeug.

Die Getriebeeinrichtung ist dem Kraftfahrzeug zugeordnet und bildet insoweit einen Bestandteil des Kraftfahrzeugs. Die Getriebeeinrichtung liegt insbesondere in einer Wirkverbindung zwischen einer Antriebseinrichtung des Kraftfahrzeugs und wenigstens einer angetriebenen Achse des Kraftfahrzeugs vor. Selbstverständlich können auch mehrere angetriebene Achsen vorgesehen sein. In diesem Fall liegt die Getriebeeinrichtung in der Wirkverbindung zwischen der Antriebseinrichtung und zumindest einigen der angetriebenen Achsen, insbesondere allen angetriebenen Achsen, des Kraftfahrzeugs vor.

Die Antriebseinrichtung dient dabei dem Bereitstellen eines auf das Antreiben des Kraftfahrzeugs gerichteten Drehmoments. Dieses Drehmoment wird über die Getriebeeinrichtung beziehungsweise über das der Getriebeeinrichtung zugeordnete Getriebe übertragen. Die Getriebeeinrichtung dient dem Einstellen unterschiedlicher Übersetzungen zwischen der Antriebseinrichtung und der wenigstens einen angetriebenen Achse. Jede dieser Übersetzungen ist einem Fahrgang zugeordnet. Üblicherweise liegt eine Vielzahl von Fahrgängen vor, wobei jedem Fahrgang eine Übersetzung zugeordnet ist, welche von den Übersetzungen der anderen Fahrgänge verschieden ist. Die Fahrgänge umfassen vorzugsweise mehrere Vorwärtsfahrgänge. Zusätzlich kann den Fahrgängen wenigstens ein Rückwärtsgang zugeordnet sein.

Aus dem Stand der Technik ist beispielsweise die Druckschriften WO 02/087917 A1 bekannt, welche einen motorgetriebenen Traktor zeigt, der über eine automatische Kupplung sowie ein Getriebe zwischen einer Antriebseinrichtung und Antriebsrädern verfügt. Weiterhin ist aus der Druckschrift EP 1 134 458 A2 eine Steuerung für die Auswahl eines Übersetzungsverhältnisses für Automatikgetriebe bekannt.

Mit Hilfe des Getriebes können also verschiedene Fahrgänge beziehungsweise Übersetzungen eingestellt werden. Das Getriebe liegt insoweit als Schaltgetriebe vor. Zum Einstellen eines bestimmten Fahrgangs an dem Getriebe, beispielsweise zum Anfahren des Kraftfahrzeugs, wird der Fahrgang aus einer Fahrgangmenge ausgewählt, welche vorzugsweise eine Vielzahl von Fahrgängen aufweist, insbesondere alle von dem Getriebe bereitgestellten Fahrgänge. Anschließend wird der ausgewählte Fahrgang an dem Getriebe eingestellt, sodass die dem Fahrgang zugeordnete Übersetzung nachfolgend zwischen der Antriebseinrichtung und der wenigstens einen angetriebenen Achse vorliegt. Das Anfahren liegt beispielsweise vor, wenn sich das Kraftfahrzeug aus einem Stillstand in Bewegung setzt beziehungsweise setzen soll.

Es ist nun Aufgabe der Erfindung, ein Verfahren zum Betreiben einer Getriebeeinrichtung vorzuschlagen, welches gegenüber anderen Verfahren Vorteile aufweist, insbesondere einen höheren Fahrkomfort des Kraftfahrzeugs ermöglicht.

Ferner ist es Aufgabe der vorliegenden Erfindung, eine Getriebeeinrichtung für ein Kraftfahrzeug mit dem genannten Vorteil vorzuschlagen.

Dies wird erfindungsgemäß mit einem Verfahren mit den Merkmalen des Anspruchs 1 und einer Getriebeeinrichtung mit den Merkmalen nach Anspruch 8 erreicht.

Die Fahrganggesamtmenge weist alle Fahrgänge des Getriebes auf, insbesondere alle Vorwärtsfahrgänge. Die Fahrgangmenge wird nun aus den in der Fahrganggesamtmenge enthaltenen Fahrgängen zusammengestellt. Dies erfolgt in Abhängigkeit von der wenigstens einen Zustandsgröße. Entsprechend setzt sich die Fahrgangmenge, insbesondere in dem Normalbetriebsmodus, aus der bestimmten Anzahl an den in der Fahrganggesamtmenge enthaltenen Fahrgängen zusammen. Die Anzahl der in der Fahrgangmenge enthaltenen Fahrgänge kann grundsätzlich beliebig sein. Vorzugsweise entspricht die Anzahl zumindest gleich Eins und höchstens der Anzahl der in der Fahrganggesamtmenge enthaltenen Fahrgänge.

Insgesamt wird in dem Normalbetriebsmodus die Möglichkeit geschaffen, die Anzahl der zum Einstellen an dem Getriebe zur Verfügung stehenden Fahrgänge in Abhängigkeit von der Zustandsgröße des Kraftfahrzeugs einzuschränken, sodass nicht alle in der Fahrganggesamtmenge enthaltenen Fahrgänge an dem Getriebe eingestellt werden können. Anders ausgedrückt ist es vorgesehen, dass die Fahrgangmenge in Abhängigkeit von wenigstens einer Zustandsgröße des Kraftfahrzeugs aus in einer Fahrgangmenge enthaltenen Fahrgängen zusammengestellt wird, wobei die Fahrganggesamtmenge alle Fahrgänge des Getriebes enthält.

Besonders bevorzugt ist in einer Weiterbildung der Erfindung vorgesehen, dass das Verfahren im Rahmen eines unabhängigen Softwaremoduls durchgeführt wird. Das Zusammenstellen der Fahrgangmenge aus der Fahrganggesamtmenge wird insoweit ausschließlich in Abhängigkeit von der wenigstens einen Zustandsgröße vorgenommen. Mittels eines Schalters kann eine Betriebsart aus einer erste Betriebsart und einer zweiten Betriebsart ausgewählt werden. Der Schalter liegt vorzugsweise in Form eines Softwareschalters vor, liegt also beispielsweise in Form einer Variable, insbesondere einer booleschen Variable vor. Der Schalter kann von dem Fahrer des Kraftfahrzeugs und/oder einer Fahrerassistenzeinrichtung betätigt werden. Der Fahrer und/oder die Fahrerassistenzeinrichtung wählen insoweit die durchzuführende Betriebsart aus der ersten Betriebsart und der zweiten Betriebsart aus.

In der ersten Betriebsart wird die Fahrgangmenge aus der Fahrgangmenge zusammengestellt, das Softwaremodul ist insoweit aktiviert. In der zweiten Betriebsart ist das Softwaremodul dagegen deaktiviert. In diesem Fall soll die Fahrgangmenge stets der Fahrganggesamtmenge entsprechen. Das Softwaremodul weist beispielsweise als einzige Eingangsgrößen die durchzuführende Betriebsart beziehungsweise die vorstehend beschriebene Variable, die wenigstens eine Zustandsgröße sowie die Fahrganggesamtmenge auf. Als einzige Ausgangsgröße verfügt es über die Fahrgangmenge. Insoweit ist beispielsweise das Softwaremodul von anderen Softwaremodulen vollständig gekapselt ausgestaltet.

Das bedeutet vorzugsweise, dass die Auswahl des an dem Getriebe einzustellenden Gangs separat von dem Softwaremodul, insbesondere von einem weiteren Softwaremodul, vorgenommen wird. Beispielsweise wird dabei mittels eines Kennfelds, insbesondere in Abhängigkeit von wenigstens des Betriebspunkts der Getriebeeinrichtung und/oder der Antriebseinrichtung, ein einzustellender Fahrgang aus der Fahrgangmenge ausgewählt und an dem Getriebe eingestellt. Alternativ kann es selbstverständlich vorgesehen sein, dass anhand des Betriebspunkts ein optimaler Fahrgang beziehungsweise eine optimale Übersetzung ermittelt und der diesem optimalen Fahrgang nächstliegende Fahrgang aus der Fahrgangmenge ermittelt und an dem Getriebe eingestellt wird. Jedenfalls erfolgen das Zusammenstellen der Fahrgangmenge aus der Fahrganggesamtmenge einerseits und das Auswählen und Einstellen des Fahrgangs an dem Getriebe andererseits völlig unabhängig voneinander.

In einer bevorzugten Ausgestaltung der Erfindung ist vorgesehen, dass ein kleinster Fahrgang der Fahrgangmenge größer ist als ein kleinster Fahrgang der Fahrganggesamtmenge. Darunter ist insbesondere zu verstehen, dass die Übersetzung des kleinsten Fahrgangs der Fahrgangmenge größer ist als die Übersetzung des kleinsten Fahrgangs der Fahrganggesamtmenge. Auf diese Art und Weise kann beispielsweise das Anfahren des Kraftfahrzeugs in dem Normalbetriebsmodus mit einem Fahrgang vorgenommen werden, welcher größer ist als der kleinste in der Fahrganggesamtmenge enthaltene Fahrgang. Das Anfahren beziehungsweise der Anfahrvorgang wird dabei bevorzugt mit dem kleinsten zur Verfügung stehenden Fahrgang der Fahrgangmenge durchgeführt.

In einer weiteren bevorzugten Ausgestaltung der Erfindung ist vorgesehen, dass der kleinste Fahrgang der Fahrgangmenge einem auf den kleinsten Fahrgang folgenden Fahrgang der Fahrganggesamtmenge entspricht. Auf eine derartige Ausgestaltung wurde bereits eingegangen. Anders ausgedrückt ist es vorgesehen, dass die Fahrgangmenge alle Fahrgänge der Fahrganggesamtmenge aufweist, mit Ausnahme des kleinsten Fahrgangs oder der kleinsten Fahrgänge. Beispielsweise entspricht also der kleinste Fahrgang der Fahrganggesamtmenge dem unmittelbar auf den kleinsten Fahrgang folgenden Fahrgang der Fahrganggesamtmenge.

Insoweit ist es beispielsweise vorgesehen, dass die Fahrganggesamtmenge zumindest die Fahrgänge "eins", "zwei" und "drei" (beliebig erweiterbar, beispielsweise auf vier Fahrgänge, fünf Fahrgänge, sechs Fahrgänge, sieben Fahrgänge, acht Fahrgänge oder neun Fahrgänge), während die Fahrgangmenge als kleinsten Fahrgang den Fahrgang "zwei" oder "drei" (und zusätzlich die weiteren Fahrgänge der Fahrganggesamtmenge) aufweist, insgesamt also in ersterem Fall zumindest die Fahrgänge "zwei" und "drei". Somit wird in dem Normalbetriebsmodus in Abhängigkeit von der Zustandsgröße das Anfahren des Kraftfahrzeugs, bei welchem der kleinste zur Verfügung stehende Fahrgang eingelegt ist, mit einem größeren Fahrgang und entsprechend einer größeren Übersetzung vorgenommen als von der Fahrganggesamtmenge vorgesehen.

Eine Weiterbildung der Erfindung sieht vor, dass der kleinste Fahrgang der Fahrgangmenge als Anfahrgang ausgelegt ist. Das bedeutet, dass der kleinste Fahrgang der Fahrgangmenge derart ausgewählt ist, dass das Anfahren des Kraftfahrzeugs zuverlässig möglich ist, wenn dieser Fahrgang an dem Getriebe eingestellt ist. Insoweit kann beispielsweise der kleinste Fahrgang der Fahrgangmenge auch in Anhängigkeit von der Untergrundneigung ausgewählt werden, wobei der kleinste Fahrgang der Fahrgangmenge bevorzugt umso größer gewählt wird, je stärker das Anfahren des Kraftfahrzeugs von einem Schwerkrafteinfluss unterstützt wird, beispielsweise weil das Kraftfahrzeug an einem abschüssigen Hang steht. Deutet die Untergrundneigung dagegen auf eine von dem Kraftfahrzeug während des Anfahrens zu bewältigende Steigung hin, so wird der kleinste Fahrgang der Fahrgangmenge umso kleiner gewählt, je größer die Untergrundneigung ist.

In einer weiteren besonders bevorzugten Ausführungsform der Erfindung ist vorgesehen, dass als Zustandsgröße ein momentan an dem Getriebe eingestellter Fahrgang, ein ausgewähltes Fahrprogramm und/oder ein ausgewählter Fahrmodus, eine Untergrundneigung, eine Getriebetemperatur, eine Umgebungstemperatur, ein Anhängerbetriebswert, ein Umgebungsluftdruck, eine geodätische Höhe und/oder ein Fahrerprofil verwendet werden. Zumindest eine dieser Zustandsgrößen wird während des Zusammenstellens der Fahrgangmenge aus den in der Fahrganggesamtmenge enthaltenen Fahrgängen herangezogen. Besonders bevorzugt werden jedoch mehrere der genannten Zustandsgrößen, insbesondere alle der genannten Zustandsgrößen, verwendet.

Beispielsweise wird der momentan an dem Getriebe eingestellte Fahrgang als Zustandsgröße verwendet. Insbesondere wird der momentan eingestellte Fahrgang stets in die Fahrgangmenge aufgenommen, auch wenn dies der kleinste Fahrgang der Fahrganggesamtmenge sein sollte. Insbesondere wird der momentan eingestellte Fahrgang auch dann in die Fahrgangmenge aufgenommen, wenn sich beispielsweise auf Grundlage wenigstens einer weiteren der Zustandsgrößen ergeben sollte, dass dieser Fahrgang nicht in der Fahrgangmenge berücksichtigt werden sollte. Mit einer derartigen Vorgehensweise werden unnötige Fahrgangwechsel vermieden.

Zusätzlich oder alternativ kann das ausgewählte Fahrprogramm und/oder der ausgewählte Fahrmodus herangezogen werden. An der Getriebeeinrichtung ist das Fahrprogramm, insbesondere aus einer zulässigen Fahrprogammmenge, oder der bestimmte Fahrmodus eingestellt. Die Getriebeeinrichtung kann beispielsweise über eine sogenannte "shift by wire"-Ansteuerung angesprochen werden. Das bedeutet, dass eine ausschließlich elektronische und/oder optische Kommunikation zwischen einem Wählhebel und der Getriebeeinrichtung vorliegt, insbesondere keine mechanische und/oder hydraulische Kommunikation. Der Wählhebel liegt jedoch bevorzugt auch bei anderen Ausgestaltungen der Ansteuerung vor, beispielsweise bei einer mechanischen und/oder manuellen Ansteuerung.

An dem Wählhebel kann ein Fahrer des Kraftfahrzeugs das gewünschte Fahrprogramm einstellen, insbesondere durch Verlagern des Wählhebels in eine bestimmte Stellung. Die Stellung des Wählhebels wird nun vorzugsweise elektronisch und/oder optisch, insbesondere ausschließlich auf diese Art, an die Getriebeeinrichtung übermittelt. Beispielsweise kann der Wählhebel in einer Parkstellung "P", einer Rückwärtsfahrstellung "R", einer Neutralstellung "N" sowie einer Vorwärtsfahrstellung "D" angeordnet sein. Diesen Stellungen entsprechend können ein Parkprogramm, ein Rückwärtsfahrprogramm, ein Neutralprogramm und ein Vorwärtsfahrprogramm vorliegen. Selbstverständlich kann das ausgeführte Programm auch auf andere Art und Weise ausgewählt werden.

Vorzugsweise kann zusätzlich oder alternativ ein Fahrmodus ausgewählt werden. Dieser beschreibt beispielsweise die gewünschte Fahrweise, also insbesondere sportlich, effizient oder automatisch. In letzterem Fall wird beispielsweise automatisch zwischen sportlicher und effizienter Fahrweise umgeschaltet oder übergeblendet, insbesondere stufenlos. Beispielsweise ist es nun vorgesehen, dass bei Auswahl der Vorwärtsfahrstellung und auf sportliche Fahrweise eingestelltem Fahrmodus alle Fahrgänge der Fahrganggesamtmenge in die Fahrgangmenge übertragen werden. Entspricht der ausgewählte Fahrmodus jedoch anstelle der sportlichen Fahrweise der effizienten Fahrweise, so wird beispielsweise zumindest der kleinste Fahrgang der Fahrganggesamtmenge oder auch mehrere Fahrgänge der Fahrganggesamtmenge, insbesondere die kleinsten Fahrgänge, bei dem Zusammenstellen der Fahrgangmenge nicht berücksichtigt, also nicht in die Fahrgangmenge aufgenommen.

Auch die Untergrundneigung kann als Zustandsgröße verwendet werden, wie bereits vorstehend dargelegt wurde. Steht das Kraftfahrzeug beispielsweise in Richtung eines Abhangs, wird also eine Beschleunigung des Kraftfahrzeugs in Fahrtrichtung von der Schwerkraft unterstützt, so kann der kleinste Fahrgang der Fahrgangmenge größer gewählt werden als der kleinste Fahrgang der Fahrganggesamtmenge. Der kleinste Fahrgang der Fahrgangmenge kann dabei umso größer gewählt werden, je stärker die Untergrundneigung ausgeprägt ist, also je deutlicher die Beschleunigung des Kraftfahrzeugs von der Schwerkraft unterstützt ist.

Zusätzlich oder alternativ wird die Getriebetemperatur als Zustandsgröße herangezogen. Unter der Getriebetemperatur ist dabei beispielsweise eine Schmiermittelsumpftemperatur, eine Elektroniktemperatur oder eine Wandlermodelltemperatur zu verstehen. Auch die Umgebungstemperatur kann Einfluss auf das Zusammenstellen der Fahrgangmenge haben. Je größer der kleinste Fahrgang der Fahrgangmenge ist, umso stärker erwärmt sich eine Anfahrkupplung des Kraftfahrzeugs, welche beispielsweise zwischen der Antriebseinrichtung und der Getriebeeinrichtung vorliegt. Beispielsweise kann der kleinste Fahrgang der Fahrgangmenge umso größer gewählt werden, je niedriger die Umgebungstemperatur ist.

Analog kann für die Schmiermittelsumpftemperatur, die Elektroniktemperatur und/oder die Wandlermodelltemperatur verfahren werden. Beispielweise wird aus wenigstens zwei der genannten Temperaturen, vorzugsweise allen der genannten Temperaturen, eine Modelltemperatur gebildet. Je größer die Modelltemperatur ist, umso kleiner wird der kleinste Fahrgang gewählt, der aus der Fahrganggesamtmenge in die Fahrgangmenge übernommen wird.

Der Anhängerbetriebswert zeigt an, ob ein Anhänger an das Kraftfahrzeug angekoppelt ist oder nicht. Zeigt der Anhängerbetriebswert eine Kopplung des Kraftfahrzeugs mit dem Anhänger an, so wird vorzugsweise die Fahrgangmenge gleich der Fahrganggesamtmenge gesetzt, weil in diesem Fall die Fahrzeugmasse die Verwendung von kleineren Fahrgängen zum Beschleunigen des Kraftfahrzeugs notwendig macht. Auch die weiteren Größen können während dem Zusammenstellen der Fahrgangmenge herangezogen werden.

Zusätzlich oder alternativ kann das Fahrerprofil herangezogen werden. Das Fahrerprofil wird beispielsweise anhand einer Beschleunigung des Kraftfahrzeugs bei bisherigen Anfahrvorgängen, beispielsweise der mittleren Beschleunigung beim Anfahren, bestimmt. Aus dieser Beschleunigung wird nun ein Kennwert ermittelt, der beschreibt, ob der Fahrer eher eine effiziente oder eine sportliche Fahrweise bevorzugt. Besonders bevorzugt ist eine Fahrererkennung vorgesehen, die den derzeit einen Fahrbetrieb des Kraftfahrzeugs durchführenden Fahrer erkennt. In Abhängigkeit von dem erkannten Fahrer wird nun das entsprechende Fahrerprofil ausgewählt. Gemäß den vorstehenden Ausführungen kann das Fahrerprofil an die aktuelle Fahrweise des Fahrers angepasst werden. Vorzugsweise wird das Fahrerprofil zwischengespeichert, sodass es bereits zur Verfügung steht, sobald der Fahrbetrieb erneut von diesem Fahrer durchgeführt wird.

Es kann vorgesehen sein, dass der Fahrertyp in einem separaten Softwaremodul durchgeführt wird. Dabei kann gemäß den vorstehenden Ausführungen vorgegangen werden. Der Fahrertyp wird dabei vorzugsweise an einer Schnittstelle bereitgestellt. Im Rahmen einer Weiterbildung der Erfindung kann anschließend auf den an der Schnittstelle bereitgestellten Fahrertyp beziehungsweise die entsprechende Größe zurückgegriffen und als Zustandsgröße herangezogen werden.

Eine bevorzugte Ausgestaltung der Erfindung sieht vor, dass bei Überschreiten einer Fahrpedalstellungsschwelle durch eine Fahrpedalstellung in einen Alternativbetriebsmodus umgeschaltet wird, in welchem die Fahrgangmenge der Fahrganggesamtmenge entspricht. Die Fahrpedalstellung beschreibt die Stellung eines Fahrpedals. Unter dem Fahrpedal ist beispielsweise ein Gaspedal des Kraftfahrzeugs zu verstehen. Die Fahrpedalstellung gibt insoweit die Stellung des Gaspedals wieder. Je stärker das Fahrpedal betätigt wird, umso größer ist die Fahrpedalstellung. Überschreitet nun die Fahrpedalstellung die Fahrpedalstellungsschwelle, so wird in den Alternativbetriebsmodus umgeschaltet, vorzugsweise aus dem Normalbetriebsmodus. In dem Alternativbetriebsmodus entspricht die Fahrgangmenge stets der Fahrganggesamtmenge.

Schließlich kann in einer weiteren Ausgestaltung der Erfindung vorgesehen sein, dass das Zusammenstellen der Fahrgangmenge durchgeführt wird, wenn eine Fahrgeschwindigkeit des Kraftfahrzeugs eine Fahrgeschwindigkeitsschwelle unterschreitet. Liegt die Fahrgeschwindigkeit dagegen über der Fahrgeschwindigkeitsschwelle, so kann es vorgesehen sein, dass die Fahrgangmenge der Fahrganggesamtmenge entspricht. Es kann jedoch auch vorgesehen sein, dass das Zusammenstellen der Fahrgangmenge lediglich in einem Stillstand des Kraftfahrzeugs erfolgt, weil in diesem Zustand auf die bei einem nachfolgenden Anfahren des Kraftfahrzeugs vorliegenden Zustandsgrößen zuverlässig geschlossen werden kann.

Die Erfindung betrifft weiterhin eine Getriebeeinrichtung für ein Kraftfahrzeug, insbesondere zur Durchführung des vorstehend beschriebenen Verfahrens, mit den Merkmalen nach Anspruch 8.

Auf die Vorteile einer derartigen Ausgestaltung der Getriebeeinrichtung beziehungsweise einer derartigen Vorgehensweise wurde bereits hingewiesen. Sowohl die Getriebeeinrichtung als auch das Verfahren können gemäß den vorstehenden Ausführungen weitergebildet sein, sodass insoweit auf diese verwiesen wird.

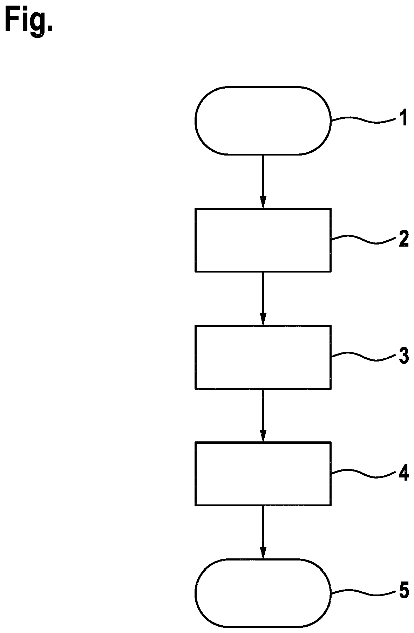

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Ablaufdiagram eines Verfahrens zum Betreiben einer Getriebeeinrichtung für ein Kraftfahrzeug.

Das in der Figur dargestellt Ablaufdiagram beschreibt ein Verfahren zum Betreiben einer Getriebeeinrichtung für ein Kraftfahrzeug. Das Verfahren beginnt an einem Startpunkt 1. Im Rahmen einer Operation 2 wird wenigstens eine Zustandsgröße des Kraftfahrzeugs bestimmt. Anschließend wird im Rahmen einer Operation 3 eine Fahrgangmenge, also eine Menge an Fahrgängen, zusammengestellt. Dieses Zusammenstellen erfolgt aus in einer Fahrganggesamtmenge enthaltenen Fahrgängen, wobei die Fahrganggesamtmenge alle Fahrgänge des Getriebes aufweist.

In Abhängigkeit von der vorstehend ermittelten wenigstens einen Zustandsgröße wird entschieden, ob einzelne Fahrgänge aus der Fahrganggesamtmenge in die Fahrgangmenge übernommen werden oder nicht. Beispielsweise dient eine Untergrundneigung des Kraftfahrzeugs als Zustandsgröße. Deutet die Untergrundneigung auf eine Neigung hin, bei welcher eine Beschleunigung des Kraftfahrzeugs in Fahrtrichtung durch Schwerkrafteinfluss unterstützt wird, so werden beispielsweise alle Fahrgänge mit Ausnahme des kleinsten Fahrgangs aus der Fahrganggesamtmenge in die Fahrgangmenge übertragen. Anschließend wird im Rahmen einer Operation 4 ein Fahrgang aus der vorstehend zusammengestellten Fahrgangmenge ausgewählt und an dem Getriebe eingestellt. In einem Endpunkt 5 wird das Verfahren beendet.

Mit dem vorstehend erläuterten Verfahren kann insbesondere ein Anfahrvorgang des Kraftfahrzeugs deutlich komfortabler gestaltet werden, weil ein Zugkraftsprung, wie er bei einem Hochschalten von einem kleinsten Fahrgang der Fahrganggesamtmenge auf einen nächstkleineren Fahrgang der Fahrganggesamtmenge auftritt, vermieden wird.

## Patentansprüche

1. Verfahren zum Betreiben einer Getriebeeinrichtung für ein Kraftfahrzeug, wobei der Getriebeeinrichtung ein Getriebe zugeordnet ist, wobei eine Fahrganggesamtmenge alle Fahrgänge des Getriebes enthält, **dadurch gekennzeichnet, dass** sich in einer ersten Betriebsart, einem Normalbetriebsmodus, eine Fahrgangmenge aus einer bestimmten Anzahl an in der Fahrganggesamtmenge enthaltenen Fahrgängen zusammensetzt,
wobei diese Fahrgangmenge in Abhängigkeit von wenigstens einer Zustandsgröße des Kraftfahrzeugs zusammengestellt wird,
dass in einer zweiten Betriebsart die Fahrgangmenge der Fahrganggesamtmenge entspricht,
und dass unabhängig von dem Zusammenstellen der Fahrgangmenge aus der Fahrganggesamtmenge ein Fahrgang aus der Fahrgangmenge ausgewählt und an dem Getriebe eingestellt wird.

2. Verfahren nach Anspruch 1, **dadurch gekennzeichnet, dass** ein kleinster Fahrgang der Fahrgangmenge größer ist als ein kleinster Fahrgang der Fahrganggesamtmenge.

3. Verfahren nach einem der vorhergehenden Ansprüche, **dadurch gekennzeichnet, dass** der kleinste Fahrgang der Fahrgangmenge einem auf den kleinsten Fahrgang folgenden Fahrgang der Fahrganggesamtmenge entspricht.

4. Verfahren nach einem der vorhergehenden Ansprüche, **dadurch gekennzeichnet, dass** der kleinste Fahrgang der Fahrgangmenge als Anfahrgang ausgelegt ist.

5. Verfahren nach einem der vorhergehenden Ansprüche, **dadurch gekennzeichnet, dass** als Zustandsgröße ein momentan an dem Getriebe eingestellter Fahrgang, ein ausgewähltes Fahrprogramm und/oder ein ausgewählter Fahrmodus, eine Untergrundneigung, eine Getriebetemperatur, eine Umgebungstemperatur, ein Anhängerbetriebswert, ein Umgebungsluftdruck, eine geodätische Höhe und/oder ein Fahrerprofil verwendet werden.

6. Verfahren nach einem der vorhergehenden Ansprüche, **dadurch gekennzeichnet, dass** bei Überschreiten einer Fahrpedalstellungsschwelle durch eine Fahrpedalstellung in einen dem zweiten Betriebsmodus entsprechenden Alternativbetriebsmodus umgeschaltet wird, in welchem die Fahrgangmenge der Fahrganggesamtmenge entspricht.

7. Verfahren nach einem der vorhergehenden Ansprüche, **dadurch gekennzeichnet, dass** das Zusammenstellen der Fahrgangmenge durchgeführt wird, wenn eine Fahrgeschwindigkeit des Kraftfahrzeugs eine Fahrgeschwindigkeitsschwelle unterschreitet.

8. Getriebeeinrichtung für ein Kraftfahrzeug, insbesondere zur Durchführung des Verfahrens nach einem oder mehreren der vorhergehenden Ansprüche, wobei der Getriebeeinrichtung ein Getriebe zugeordnet ist und eine Fahrganggesamtmenge alle Fahrgänge eines Getriebes enthält, , **dadurch gekennzeichnet, dass** die Getriebeeinrichtung dazu ausgebildet ist, eine Fahrgangmenge in Abhängigkeit von wenigstens einer Zustandsgröße des Kraftfahrzeugs derart zusammenzustellen, dass sich in einer ersten Betriebsart, einem Normalbetriebsmodus, diese Fahrgangmenge aus einer bestimmten Anzahl an in der Fahrganggesamtmenge enthaltenen Fahrgängen zusammensetzt und in einer zweiten Betriebsart die Fahrgangmenge der Fahrganggesamtmenge entspricht, und dass ferner die Getriebeeinrichtung so ausgebildet ist, dass unabhängig von dem Zusammenstellen der Fahrgangmenge aus der Fahrganggesamtmenge ein Fahrgang aus der Fahrgangmenge ausgewählt und an dem Getriebe eingestellt wird.

## Claims

1. Method for operating a transmission device for a motor vehicle, wherein a transmission is assigned to the transmission device, wherein a total driving gear quantity contains all the driving gears of the transmission, **characterised in that,** in a first operating mode, a normal operating mode, a driving gear quantity is composed of a specified number of driving gears contained in the total driving gear quantity, wherein said driving gear quantity is composed as a function of at least one state variable of the motor vehicle, that, in a second operating mode, the driving gear quantity corresponds to the total driving gear quantity, and that, independently of the composing of the driving gear quantity from the total driving gear quantity, a driving gear is selected from the driving gear quantity and set on the transmission.

2. Method according to claim 1, **characterised in that** a smallest driving gear of the driving gear quantity is greater than a smallest driving gear of the total driving gear quantity.

3. Method according to any one of the preceding claims, **characterised in that** the smallest driving gear of the driving gear quantity corresponds to a driving gear of the total driving gear quantity following the smallest driving gear.

4. Method according to any one of the preceding claims, **characterised in that** the smallest driving gear of the driving gear quantity is designed as start-up gear.

5. Method according to any one of the preceding claims, **characterised in that** a driving gear currently set on the driving gear, a selected driving program and/or a selected driving mode, a subsurface inclination, a transmission temperature, an ambient temperature, an operating value of a trailer, an ambient air pressure, a geodetic height and/or a driver profile are used as state variable.

6. Method according to any one of the preceding claims, **characterised in that,** when an accelerator pedal position threshold is exceeded by an accelerator pedal position, there is a switch to an alternative operating mode corresponding to the second operating mode, in which the driving gear quantity corresponds to the total driving gear quantity.

7. Method according to any one of the preceding claims, **characterised in that** the composing of the driving gear quantity is carried out when a driving speed of the motor vehicle is below a driving speed threshold.

8. Transmission device for a motor vehicle, in particular for carrying out the method according to one or more of the preceding claims, wherein a transmission is assigned to the transmission device and a total driving gear quantity contains all the driving gears of a transmission, **characterised in that** the transmission device is configured to compose a driving gear quantity as a function of at least one state variable of the motor vehicle in such a way that, in a first operating mode, a normal operating mode, said driving gear quantity is composed of a specified number of driving gears contained in the total driving gear quantity and, in a second operating mode, the driving gear quantity corresponds to the total driving gear quantity, and that furthermore the transmission device is configured such that, independently of the composing of the driving gear quantity from the total driving gear quantity, a driving gear is selected from the driving gear quantity and set on the transmission.

## Revendications

1. Procédé de fonctionnement d'un dispositif de transmission pour un véhicule automobile, dans lequel au dispositif de transmission est associée une transmission, dans lequel une quantité entière de rapport de marche contient tous les rapports de marche de la transmission, **caractérisé en ce que** dans un premier mode de fonctionnement, un mode de fonctionnement normal, une quantité de rapport de marche se compose d'un nombre déterminé de rapports de marche contenus dans la quantité entière de rapport de marche,
dans lequel cette quantité de rapport de marche est rassemblée en fonction d'au moins une grandeur d'état du véhicule automobile,
**que** dans un second mode de fonctionnement la quantité de rapport de marche correspond à la quantité entière de rapport de marche,
et qu'indépendamment de la réunion de la quantité de rapport de marche à partir de la quantité entière de rapport de marche un rapport de marche est sélectionné parmi la quantité de rapport de marche et est réglé au niveau de la transmission.

2. Procédé selon la revendication 1, **caractérisé en ce que** le plus petit rapport de marche de la quantité de rapport de marche est supérieur au plus petit rapport de marche de la quantité entière de rapport de marche.

3. Procédé selon l'une des revendications précédentes, **caractérisé en ce que** le plus petit rapport de marche de la quantité de rapport de marche correspond à un rapport de marche suivant le plus petit rapport de marche de la quantité entière de rapport de marche.

4. Procédé selon l'une des revendications précédentes, **caractérisé en ce que** le plus petit rapport de marche de la quantité de rapport de marche est conçu comme rapport de démarrage.

5. Procédé selon l'une des revendications précédentes, **caractérisé en ce qu'**un rapport de marche réglé momentanément au niveau de la transmission, un programme de marche sélectionné, et/ou un mode de marche sélectionné, une inclinaison de sol, une température de transmission, une température ambiante, une valeur de fonctionnement de remorque, une pression d'air ambiante, une hauteur géodésique et/ou un profil de conducteur sont utilisés comme grandeur d'état.

6. Procédé selon l'une des revendications précédentes, **caractérisé en ce qu'**en cas de dépassement d'un seuil de position de pédale d'accélérateur par une position de pédale d'accélérateur, il est commuté dans un mode de fonctionnement alternatif correspondant au second mode de fonctionnement, dans lequel la quantité de rapport de marche correspond à la quantité entière de rapport de marche.

7. Procédé selon l'une des revendications précédentes, **caractérisé en ce que** la réunion de la quantité de rapport de marche est réalisée lorsqu'une vitesse de marche du véhicule automobile ne dépasse pas un seuil de vitesse de marche.

8. Dispositif de transmission pour un véhicule automobile, en particulier pour la réalisation du procédé selon l'une ou plusieurs des revendications précédentes, dans lequel au dispositif de transmission est associée une transmission et une quantité entière de rapport de marche contient tous les rapport de marche d'une transmission, **caractérisé en ce que** le dispositif de transmission est réalisé afin de réunir une quantité de rapport de marche en fonction d'au moins une grandeur d'état du véhicule automobile de telle manière que dans un premier mode de fonctionnement, un mode de fonctionnement normal, cette quantité de rapport de marche se compose d'un nombre déterminé de rapports de marche contenus dans la quantité entière de rapport de marche et dans un second mode de fonctionnement la quantité de rapport de marche corresponde à la quantité entière de rapport de marche, et que de plus le dispositif de transmission est réalisé de sorte qu'indépendamment de la réunion de la quantité de rapport de marche à partir de la quantité entière de rapport de marche un rapport de marche est sélectionné parmi la quantité de rapport de marche et est réglé au niveau de la transmission.
